# EUROPÄISCHE PATENTSCHRIFT

(11) **EP 1 209 446 B1**
(45) Veröffentlichungstag und Bekanntmachung des Hinweises auf die Patenterteilung: **14.04.2004**
(21) Anmeldenummer: 01250408.0
(22) Anmeldetag: 21.11.2001
(51) Int. Cl.: G01D 3/08, G01D 5/347, F03D 11/00

(54) **Drehimpulsgeber**
Rotational pulse generator
Générateur d'impulsions rotationnel

(30) Priorität: 23.11.2000 DE 10059923
(43) Veröffentlichungstag der Anmeldung: 29.05.2002
(73) Patentinhaber: Hübner Elektromaschinen AG, 10967 Berlin (DE)
(72) Erfinder: Wilhelmy, Lothar Dr., 14195 Berlin (DE); Sawitzki, Uwe, 12307 Berlin (DE)
(74) Vertreter: Grünecker, Kinkeldey, Stockmair & Schwanhäusser

(56) Entgegenhaltungen:
- EP-A- 0 340 418
- DE-A- 3 526 645
- US-A- 4 625 256

## Beschreibung

Die Erfindung betrifft einen Drehimpulsgeber mit einem im eingebauten Zustand geerdeten metallischen Gehäuse, das mit in Isolierbuchsen gelagerten Lagern für eine mit der Welle eines Antriebsmotors oder eines Generators drehfest und leitend verbindbare, eine Inkrementalscheibe tragende Geberwelle versehen ist und in dem in einem Mindestabstand A von der Inkrementalscheibe und der Welle ein Abtastkopf sowie eine nachgeschaltete Elektronik angeordnet sind.

Drehimpulsgeber der vorstehenden Art sind aus der Zeitschrift KEM 1997, S. 144 bekannt. Sie stellen eine Weiterentwicklung von Drehimpulsgebern der aus der DE 35 26 645 A1 bekannten Bauweise dar, bei der ein Stromfluss über die nicht isoliert eingebauten Lager möglich ist. Die Isolierbuchsen für die Lager dienen bei den eingangs genannten Drehimpulsgebern dazu, eine Beeinflussung der im Gehäuse des Gebers untergebrachten Sensorik durch induktive Wellenströme zu verhindern. Das gleiche Ziel wird bei einer aus der DE 3813610 A1 bekannten Winkelmesseinrichtung verfolgt, bei der eine Abtastelektronik isoliert in einem Gehäuse untergebracht ist, das zur Abschirmung gegen elektrostatische Störeinflüsse elektrisch mit der zu überwachenden Antriebseinheit verbunden ist.

Mit einer Abschirmung ist auch ein aus der DE 19602230 bekannter, in einem Kunststoffkörper eingebetteter Sensor versehen.

Bei den bekannten Geräten ist die Elektronik zwar gegen übliche Störeinflüsse weitgehend geschützt. Die Schutzmaßnahmen bieten jedoch keine ausreichende Sicherheit vor Schäden durch Blitzeinschläge, mit denen vor allem bei Drehimpulsgebern gerechnet werden muss, die bei Windkraftgeneratoren eingesetzt werden, welch letztere - wie aus der US-A-4 625 256 bekannt - ihrerseits bereits mit einem Blitzschutz versehen sind, der hier allerdings lediglich dazu dient, die isolierten Lager der Rotorwelle des Windkraftgenerators und eine die Rotorwelle mit der Welle eines Generators verbindende, isolierende Kupplungsmanschette gegen einen Überschlag zu schützen. Demgegenüber besteht die Gefährdung einschlägiger Geber darin, dass es unter Blitzeinwirkung zu Überschlägen zwischen der mit der Generatorwelle starr und elektrisch leitend verbundenen Geberwelle und den im gemäß den VDE-Vorschriften geerdeten Gehäuse untergebrachten messtechnischen und elektronischen Bauteilen kommen kann, die zur Zerstörung der Elektronik des Gebers führen. In der DE 19910130 A1 ist deshalb ein Drehimpulsgeber mit Schleifringkontakt beschrieben, der die isoliert eingebauten Kugellager und die Elektronik vor induktiven Wellenströmen und elektrostatischen Aufladungen schützt. Der Nachteil dieser Lösung besteht darin, dass es sich bei dem Schleifringkontakt um ein verschleißbehaftetes Bauteil handelt.

Der Erfindung liegt die Aufgabe zugrunde, einen Drehimpulsgeber der in Betracht gezogenen Gattung so auszubilden, dass er ohne Schleifringkontakt auskommt und nicht durch Überschläge infolge Blitzeinwirkung geschädigt wird bzw. dass die Gefahr einer Beschädigung deutlich reduziert wird. Diese Aufgabe wird erfindungsgemäß dadurch gelöst, dass das Gehäuse mit mindestens einem Blitzschutzkonduktor versehen ist, dessen Abstand von der Geberwelle kleiner ist als der Mindestabstand zwischen der metallischen Inkrementalscheibe und dem Abtastkopf einerseits bzw. zwischen der Geberwelle und der Elektronik andererseits.

Der erfindungsgemäße Drehimpulsgeber bietet den Vorteil, dass er mit einer Soll-Funkenstrecke ausgestattet ist, die Blitzschläge an den empfindlichen Teilen des Gebers vorbeiführt.

Weitere Einzelheiten und Merkmale der Erfindung ergeben sich aus den Unteransprüchen und der nachstehenden Beschreibung dreier in der beigefügten Zeichnung dargestellter Ausführungsbeispiele. Es zeigen:
- Fig. 1: einen ersten Drehimpulsgeber mit einer im Innern seines Gehäuses angeordneten Funkenstrecke;
- Fig. 2: den Drehimpulsgeber gemäß Fig. 1 mit einer zusätzlichen Funkenstrecke und
- Fig. 3: einen modifizierten Drehimpulsgeber mit einer außerhalb des Gehäuses angeordneten Funkenstrecke.

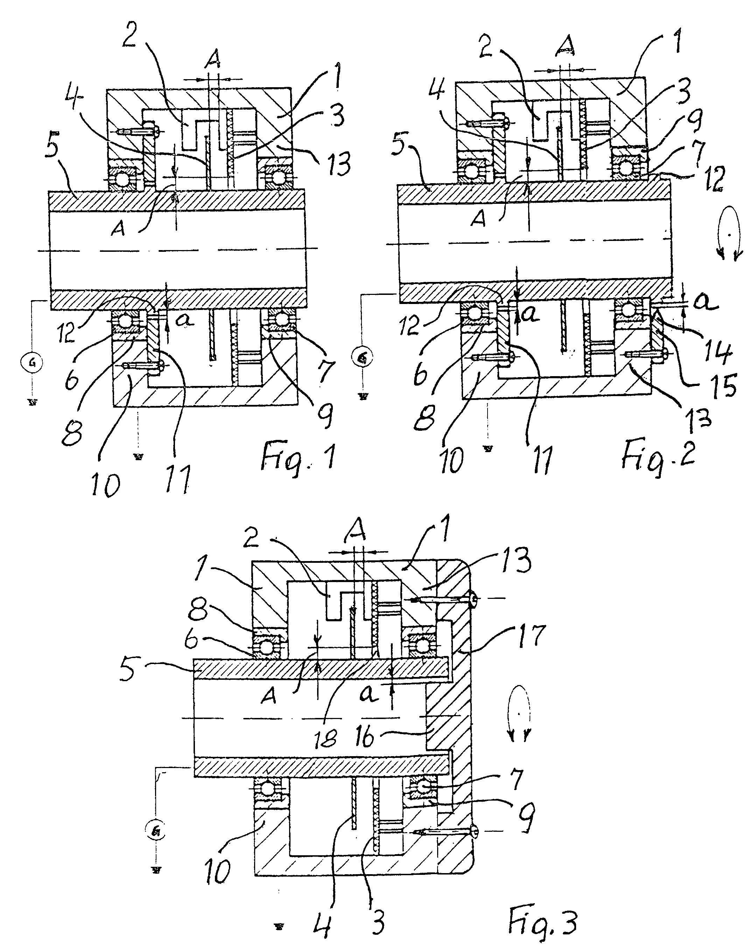

In Fig. 1 ist 1 das Gehäuse eines Drehimpulsgebers, in dem u.a. ein Abtastkopf 2 und eine Elektronik 3 zur Verarbeitung der vom Abtastkopf 2 gelieferten Signale angeordnet sind. Zur Signalerzeugung dient eine metallische Inkrementalscheibe 4, die auf der als Hohlwelle ausgebildeten Geberwelle 5 gelagert ist. Die zur Lagerung der Geberwelle 5 im Gehäuse 1 dienenden Wälzlager 6 und 7 ruhen zum Schutz vor induktiven Wellenströmen in isolierenden Kunststoffbuchsen 8 und 9. An die Innenseite der einen Seitenwand 10 des Gehäuses 1 ist eine mit einer zentralen Bohrung versehene Scheibe 11 geschraubt, die einen Ringbund 12 der Geberwelle 5 umschließt. Die Scheibe 11 bildet aufgrund der Tatsache, daß der Abstand a zwischen ihrer konzentrischen Bohrung und der Geberwelle 5 kleiner ist als der Mindestabstand A zwischen der metallischen Inkrementalscheibe 4 und dem Abtastkopf 2 einen Blitzschutzkonduktor, wobei der Mindestabstand A ebenso groß ist wie der Mindestabstand A zwischen der Geberwelle 5 und der Elektronik 3, deren Platine die Geberwelle 5 in der Regel konzentrisch umschließt. Falls es zu einem Überschlag zwischen der Geberwelle 5 und dem geerdeten Gehäuse 1 kommt, findet dieser folglich zwischen dem Ringbund 12 und der Scheibe 11 statt. Es versteht sich, daß bei Verwendung einer nichtmetallischen Inkrementalscheibe 4 lediglich dem Mindestabstand A zwischen der Elektronik 3 und der Geberwelle 5 Bedeutung zukommt.

Der Drehimpulsgeber gemäß Fig. 2 entspricht weitgehend dem Drehimpulsgeber gemäß Fig. 1, gleichen Teilen sind daher gleiche Bezugszeichen zugeordnet. Der Unterschied gegenüber dem zuvor beschriebenen Geber beschränkt sich darauf, daß an der Außenseite der Stirnwand 13 des Gehäuses 1 zusätzlich ein mit einer sich kegelförmig verjüngenden Spitze 14 versehener Profilstab 15 angeordnet ist, der mit einem zweiten Ringbund 12 eine zusätzliche Funkenstrecke bildet. Aufgrund der spitzen Ausbildung des einen äußeren Blitzschutzkonduktor bildenden Profilstabes 15 ist von einer erhöhten Überschlagswahrscheinlichkeit im Bereich der zusätzlichen Funkenstrecke auszugehen. Da die gewählte spitze Ausbildung des Endes des Profilstabes 15 einen Abbrand der Spitze 14 begünstigt, bietet sich die zusätzliche Anbringung des Profilstabes 15 in Fällen an, in denen der Benutzer des Drehimpulsgebers ein Interesse daran hat, anhand eines evtl. Abbrandes der Spitze 14 einen Nachweis für einen Blitzeinschlag zu erhalten.

Während die Drehimpulsgeber gemäß Figur 1 und 2 mit im Innern bzw. an der Außenseite ihres Gehäuses 1 angeordneten Blitzschutzkonduktoren bzw. Funkenstrekken versehen sind, weist der Drehimpulsgeber gemäß Fig. 3 eine im Innern der als Hohlwelle ausgebildeten Geberwelle 5 angeordnete Funkenstrecke auf. Als Blitzschutzkonduktor dient dabei ein Vorsprung 16 eines Gehäusedeckels 17. Auch in diesem Fall ist der Abstand a zwischen dem Vorsprung 16 und der Geberwelle 5 kleiner als der Mindestabstand A zwischen der Inkrementalscheibe 4 und dem Abtastkopf 2 bzw. zwischen der Bohrung 18 der Platine der Elektronik 3 und der Geberwelle 5, so daß ein Überschlag infolge Blitzeinwirkung wiederum gezielt zwischen der Geberwelle 5 und dem Vorsprung 16 erfolgt.

## Patentansprüche

1. Drehimpulsgeber mit einem im eingebauten Zustand geerdeten metallischen Gehäuse (1), das mit in Isolierbuchsen (8, 9) gelagerten Lagern (6, 7) für eine mit der Welle eines Antriebsmotors oder eines Generators drehfest und leitend verbindbare, eine Inkrementalscheibe (4) tragende Geberwelle (5) versehen ist, und in dem in einem Mindestabstand A von der Inkrementalscheibe (4) und der Geberwelle (5) ein Abtastkopf (2) sowie eine nachgeschaltete Elektronik (3) angeordnet sind, **dadurch gekennzeichnet, daß** das Gehäuse (1) mit mindestens einem Blitzschutzkonduktor (11; 15; 16) versehen ist, dessen Abstand (a) von der Geberwelle (5) kleiner ist als der Mindestabstand (A) zwischen der metallischen Inkrementalscheibe (4) und dem Abtastkopf (2) einerseits bzw. zwischen der Geberwelle (5) und der Elektronik (3) andererseits.

2. Drehimpulsgeber nach Anspruch 1, **dadurch gekennzeichnet, daß** der Blitzschutzkonduktor als mit dem Gehäuse (1) verbundene, die Geberwelle (5) umschließende Scheibe (11) ausgebildet ist.

3. Drehimpulsgeber nach Anspruch 1 oder 2, **dadurch gekennzeichnet, daß** die als Hohlwelle ausgebildete Geberwelle (5) an ihrem dem Blitzschutzkonduktor (11, 15) zugewandten Umfang mit mindestens einem Ringbund (12) versehen ist.

4. Drehimpulsgeber nach einem der Ansprüche 1 bis 3, **dadurch gekennzeichnet, daß** der Blitzschutzkonduktor (15) einen sich zur Geberwelle (5) hin verjüngenden Querschnitt aufweist.

5. Drehimpulsgeber nach einem der Ansprüche 1 bis 4, **dadurch gekennzeichnet, daß** der Blitzschutzkonduktor von einem Profilstab (15) mit einem spitzen Ende gebildet wird.

6. Drehimpulsgeber nach einem der Ansprüche 1 bis 5, **dadurch gekennzeichnet, daß** der Blitzschutzkonduktor (15, 16) von einem lösbar an einer Außenwand des Gehäuses (1) befestigten Bauteil gebildet wird.

7. Drehimpulsgeber nach Anspruch 6, **dadurch gekennzeichnet, daß** der Blitzschutzkonduktor von einem Gehäusedeckel (17) gebildet wird.

8. Drehimpulsgeber nach Anspruch 7, **dadurch gekennzeichnet, daß** der Gehäusedeckel (17) mit einem in das Innere der als Hohlwelle ausgebildeten Geberwelle (5) ragenden den Blitzschutzkonduktor bildenden Vorsprung (16) versehen ist.

## Claims

1. Rotary encoder having a metallic housing (1) which is earthed when in the installed state and is provided with bearings (6, 7), which are mounted in isolating bushes (8, 9), for a transmitter shaft (5) which can be conductively connected to the shaft of a drive motor or of a generator such that they rotate together and is fitted with an incremental disc (4), and in which rotary encoder a probe head (2) and downstream electronics (3) are arranged at a minimum distance (A) from the incremental disc (4) and from the transmitter shaft (5), **characterized in that** the housing (1) is provided with at least one lightning protection conductor (11; 15; 16), whose distance (a) from the transmitter shaft (5) is less than the minimum distance (A) between the metallic incremental disc (4) and the probe head (2) on the one hand, and between the transmitter shaft (5) and the electronics (3) on the other hand.

2. Rotary encoder according to Claim 1, **characterized in that** the lightning protection conductor is in the form of a disc (11) which is connected to the housing (1) and surrounds the transmitter shaft (5).

3. Rotary encoder according to Claim 1 or 2, **characterized in that** the transmitter shaft (5), which is in the form of a hollow shaft, is provided with at least one annular collar (12) on its circumference facing the lightning protection conductor (11, 15).

4. Rotary encoder according to one of Claims 1 to 3, **characterized in that** the lightning protection conductor (15) has a cross section which tapers towards the transmitter shaft (5).

5. Rotary encoder according to one of Claims 1 to 4, **characterized in that** the lightning protection conductor is formed by a profiled rod (15) with a pointed end.

6. Rotary encoder according to one of Claims 1 to 5, **characterized in that** the lightning protection conductor (15, 16) is formed by a component which is detachably attached to an outer wall of the housing (1).

7. Rotary encoder according to Claim 6, **characterized in that** the lightning protection conductor is formed by a housing cover (17).

8. Rotary encoder according to Claim 7, **characterized in that** the housing cover (17) is provided with a projection (16) which projects into the interior of the transmitter shaft (5) (which is in the form of a hollow shaft) and forms the lighting protection conductor.

## Revendications

1. Capteur de moment angulaire avec un boîtier métallique (1) mis à la terre à l'état monté, muni de paliers (6, 7) logés dans des douilles d'isolation (8, 9) pour un arbre transmetteur (5) qui porte un disque d'incrémentation (4) et qui peut être relié de manière solidaire en rotation et de manière conductrice avec un arbre d'un moteur d'entraînement ou d'un générateur, et dans lequel, à une distance minimale A du disque d'incrémentation (4) et de l'arbre transmetteur (5), se trouvent une tête de détection (2) ainsi qu'une électronique branchée en aval (3), **caractérisé en ce que** le boîtier (1) est muni d'au moins un conducteur de protection contre la foudre (11 ; 15 ; 16), dont la distance (a) de l'arbre transmetteur (5) est inférieure à la distance minimale (A) entre le disque métallique d'incrémentation (4) et la tête de détection (2), d'une part, et entre l'arbre transmetteur (5) et l'électronique (3), d'autre part.

2. Capteur de moment angulaire selon la revendication 1, **caractérisé en ce que** le conducteur de protection contre la foudre est conçu comme un disque (11) entourant l'arbre transmetteur (5) et relié au boîtier (1).

3. Capteur de moment angulaire selon la revendication 1 ou 2, **caractérisé en ce que** l'arbre transmetteur (5) conçu comme un arbre creux est muni, au niveau de sa circonférence orienté du côté du conducteur de protection de la foudre (11, 15), d'au moins un collet annulaire (12).

4. Capteur de moment angulaire selon l'une des revendications 1 à 3, **caractérisé en ce que** le conducteur de protection contre la foudre (15) comporte une section qui se rétrécit en direction de l'arbre transmetteur (5).

5. Capteur de moment angulaire selon l'une des revendications 1 à 4, **caractérisé en ce que** le conducteur de protection contre la foudre est constitué d'une barre profilée (15) avec une extrémité pointue.

6. Capteur de moment angulaire selon l'une des revendications 1 à 5, **caractérisé en ce que** le conducteur de protection contre la foudre (15, 16) est constitué d'un élément fixé de manière amovible sur la paroi extérieure du boîtier (1).

7. Capteur de moment angulaire selon la revendication 6, **caractérisé en ce que** le conducteur de protection contre la foudre est constitué d'un couvercle de boîtier (17).

8. Capteur de moment angulaire selon la revendication 7, **caractérisé en ce que** le couvercle de boîtier (17) est'muni d'une saillie (16) constituant le conducteur de protection de la foudre dépassant à l'intérieur de l'arbre transmetteur (5) conçu comme un arbre creux.
